(19) Europäisches Patentamt
European Patent Office
Office européen des brevets

(11) EP 3 289 011 B1

(12) **EUROPEAN PATENT SPECIFICATION**

(45) Date of publication and mention of the grant of the patent:
**20.03.2019 Bulletin 2019/12**

(21) Application number: **16731353.5**

(22) Date of filing: **28.04.2016**

(51) Int Cl.:
***C08L 7/00*** *(2006.01)* ***B60C 1/00*** *(2006.01)*

(86) International application number:
**PCT/JP2016/064203**

(87) International publication number:
**WO 2016/175338 (03.11.2016 Gazette 2016/44)**

(54) **A HEAT-EXPANDABLE RUBBER COMPOSITION**

WÄRMEEXPANDIERBARE KAUTSCHUKZUSAMMENSETZUNG

COMPOSITION DE CAOUTCHOUC THERMO-EXPANSIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2015 PCT/JP2015/063536**

(43) Date of publication of application:
**07.03.2018 Bulletin 2018/10**

(73) Proprietor: **Compagnie Générale des Etablissements Michelin**
**63000 Clermont-Ferrand (FR)**

(72) Inventors:
- **DOTSON, Michael Edward**
  **Tokyo 163-1073 (JP)**
- **PHAM, Dieuhuong**
  **Tokyo 163-1073 (JP)**

(74) Representative: **Regimbeau**
**20, rue de Chazelles**
**75847 Paris Cedex 17 (FR)**

(56) References cited:
**EP-A2- 2 441 794** **US-A1- 2009 239 014**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 289 011 B1

## Description

### 1. FIELD OF THE INVENTION

The invention relates to heat-expandable rubber compositions usable as treads of tires for vehicles, in particular of "winter" tires capable of rolling over ground surfaces covered with ice or black ice without being provided with studs (also known as studless tires).

The invention also relates to treads of winter tires specifically suited to rolling under "melting ice" conditions encountered within a temperature range typically of between -5°C and 0°C. It should specifically be remembered that, within such a range, the pressure of the tires during the passage of the vehicle brings about surface melting of the ice, which is covered with a thin film of water detrimental to the grip of these tires.

### 2. PRIOR ART

In order to avoid the harmful effects of the studs, in particular their strong abrasive action on the surfacing of the ground surface itself and a significantly poorer road performance on a dry ground surface, tire manufacturers have provided various solutions which consist in modifying the formulation of the rubber compositions themselves.

Thus, the proposal has been made, first of all, to incorporate solid particles of high hardness, such as, for example, silicon carbide (see, for example, US 3 878 147), some of which will come to the surface of the tread as the latter wears and thus come into contact with the ice. Such particles, capable of acting, in fact, as micro-studs on hard ice, by virtue of a well-known "claw" effect, remain relatively aggressive with regard to the ground surface; they are not well-suited to rolling conditions on melting ice.

Other solutions have thus been proposed which consist in particular in incorporating water-soluble powders in the constituent composition of the tread. Such powders dissolve more or less on contact with snow or melted ice, which makes possible, on the one hand, the creation at the surface of the tread of porosities capable of improving the grip of the tread on the ground surface and, on the other hand, the creation of grooves which act as channels for discharging the liquid film created between the tire and the ground surface. Mention may be made, as examples of such water-soluble powders, for example, of the use of cellulose powder, vinyl alcohol powder or starch powder, or else guar gum powders or xanthan gum powders (see, for example, patent applications JP 3-159803, JP 2002-211203, EP 940 435, WO 2008/080750 and WO 2008/080751).

It has also been proposed to use powder particles that are neither of high hardness nor water- soluble, which are nevertheless capable of generating an effective surface microroughness (see in particular patent applications WO 2009/083125 and WO 2009/112220).

Finally, to improve the grip performance of a tread on ice, it is well known to use a layer of foam rubber based on diene elastomer, a blowing agent and various other additives, such as in particular a blowing activator. These blowing agents, such as for example nitro, sulphonyl or azo compounds, are capable, during a thermal activation, for example during the vulcanization of the tire, of releasing a large amount of gas, especially nitrogen, and thus of leading to the formation of bubbles within a sufficiently soft material such as a rubber composition comprising such blowing agents. Such foam rubber formulations for winter tires have been described for example in the patent documents JP 2003-183434, JP 2004-091747, JP 2006-299031, JP 2007-039499, JP 2007-314683, JP2008-001826, JP 2008-150413, EP 826 522, US 5 147 477 and US 6 336 487.

However, these blowing agents and / or blowing activators may significantly decelerate curing speeds of rubber compositions, which is of course detrimental to tire production rates, so much so that it proves to be difficult for the skilled person to find foam formulations making it possible to significantly shorten curing time of the rubber compositions without degrading the grip on melting ice.

### 3. BRIEF DESCRIPTION OF THE INVENTION

During their research into the above technology relating to the use of foam rubber, the applicants have discovered a specific formulation based on a high content of a specific blowing agent and a specific activator combined, which makes it possible to greatly shorten curing time of the rubber composition, while at least maintaining or even improving the grip of treads on melting ice.

Consequently, the present invention relates to a heat-expandable rubber composition, usable as a tread of a tire in the unvulcanized state, comprising at least a diene elastomer, more than 50 phr of a reinforcing filler, between 3 and 30 phr of a carbonate and/or a hydrogen carbonate, wherein the carbonate or hydrogen carbonate comprises sodium or potassium, between 3 and 60 phr of a hetero-cycloaliphatic acid ammonium salt, a total content of (hydrogen) carbonate and the hetero-cycloaliphatic acid ammonium salt being greater than 10 phr.

Moreover, aspects of the present invention can be as follows.

(1.) A heat-expandable rubber composition, comprising at least a diene elastomer, more than 50 phr of a reinforcing filler, between 3 and 30 phr of a carbonate and/or a hydrogen carbonate, wherein the carbonate or the hydrogen carbonate comprises sodium or potassium, and between 3 and 60 phr of a hetero-cycloaliphatic acid ammonium salt, wherein a total content of the carbonate or the hydrogen carbonate and the hetero-cycloaliphatic acid ammonium salt is greater than 10 phr.

(2.) The rubber composition according to (1.), wherein the diene elastomer is selected from the group consisting of natural rubber, synthetic polyisoprenes, polybutadienes, butadiene copolymers, isoprene copolymers and the mixtures of these elastomers.

(3.) The rubber composition according to (2.), wherein the said rubber composition comprises from 50 to 100 phr of natural rubber or of synthetic polyisoprene.

(4.) The rubber composition according to (3.), wherein the natural rubber or the synthetic polyisoprene is in a blend with at most 50 phr of a polybutadiene having a content of cis-1,4- bonds of greater than 90%.

(5.) The rubber composition according to (2.), wherein said composition comprises from 50 to 100 phr of a polybutadiene having a content of cis-1,4- bonds of greater than 90%.

(6.) The rubber composition according to (5.), wherein the polybutadiene is in a blend with at most 50 phr of natural rubber or a synthetic polyisoprene.

(7.) The rubber composition according to any one of (1.) to (6.), wherein the reinforcing filler comprises an inorganic filler, carbon black or a mixture of inorganic filler and carbon black.

(8.) The rubber composition according to any one of (1.) to (7.), wherein the content of reinforcing filler is between 50 and 150 phr.

(9.) The rubber composition according to any one of (1.) to (8.), wherein the content of carbonate or hydrogen carbonate is between 3 and 25 phr.

(10.) The rubber composition according to any one of (1.) to (9.), wherein the content of the hetero-cycloaliphatic acid ammonium salt is between 3 and 40 phr.

(11.) The rubber composition according to any one of (1.) to (10.), wherein the total content of the carbonate or the hydrogen carbonate and the hetero-cycloaliphatic acid ammonium salt is greater than 15 phr.

(12.) The rubber composition according to any one of (1.) to (11.), wherein the hetero-cycloaliphatic acid ammonium salt comprises at least two nitrogen atoms and at least two carbon atoms.

(13.) The rubber composition according to (12.), wherein the hetero-cycloaliphatic acid ammonium salt comprises at least a hetero-cycloaliphatic ring comprising the carbon atoms and the nitrogen atoms.

(14.) The rubber composition according to (13.), wherein the hetero-cycloaliphatic acid ammonium salt comprises at least a hetero-cycloaliphatic amine comprising the hetero-cycloaliphatic ring(s).

(15.) The rubber composition according to (14.), wherein a ratio of the number of the carbon atoms to the number of the nitrogen atoms in the hetero-cycloaliphatic amine is at most 4.0.

(16.) The rubber composition according to (14.) or (15.), wherein the hetero-cycloaliphatic amine is a hetero-cycloaliphatic tertiary amine.

(17.) The rubber composition according to (16.), wherein the hetero-cycloaliphatic tertiary amine is a hetero-cycloaliphatic bridgehead tertiary amine.

(18.) The rubber composition according to (17.), wherein the hetero-cycloaliphatic tertiary bridgehead amine is chosen from the group consisting of hexamethylenetetramine, 1,4-diazabicyclo[2.2.2]octane and mixtures thereof.

(19.) The rubber composition according to (18.), wherein the hetero-cycloaliphatic tertiary bridgehead amine is hexamethylenetetramine.

(20.) The rubber composition according to any one of (1.) to (19.), wherein the rubber composition further comprises a vulcanization retarder.

(21.) A tire in the unvulcanized condition, comprising a heat expandable rubber composition according to any one of (1.) to (20.).

(22.) A tire in the unvulcanized condition, comprising a tread comprising a heat expandable rubber composition according to any one of (1.) to (20.).

The invention relates also to a tire comprising the heat-expandable rubber composition of the invention, said composition constituting in particular the tread of said tire, preferably at least the external portion of said tread which is in contact with the surface of the road when the tire is running.

The tires of the invention are particularly intended to equip motor vehicles of passenger type, including 4x4 (four-wheel drive) vehicles and SUV (Sport Utility Vehicles) vehicles, two-wheel vehicles (in particular motorcycles), and also industrial vehicles chosen in particular from vans and heavy-duty vehicles (i.e., underground trains, buses a nd heavy road transport vehicles, such as lorries or tractors).

The invention and its advantages will be readily understood in the light of the description and the exemplary embodiments that follow.

[Description of Embodiments]

4. DETAILED DESCRIPTION OF THE INVENTION

In the present description, unless expressly indicated otherwise, all the percentages (%) shown are % by weight. The abbreviation "phr" stands for parts by weight per hundred parts of elastomer (of the total of the elastomers if several elastomers are present).

Furthermore, any interval of values denoted by the expression "between a and b" represents the range of values greater than "a" and lower than "b" (that is to say, limits a and b excluded), whereas any interval of values denoted by the expression "from a to b" means the range of values extending from "a" up to "b" (that is to say, including the strict limits a and b).

The rubber composition of the invention has an essential feature, in the unvulcanized state, of comprising at least:

- a (at least one, i.e. one or more) diene elastomer; more than 50 phr of a (at least one, i.e. one or more) reinforcing filler;
- between 3 and 30 phr of a (at least one, i.e. one or more) carbonate or a hydrogen carbonate, wherein the carbonate or hydrogen carbonate comprises sodium or potassium;
- between 3 and 60 phr of a (at least one, i.e. one or more) hetero-cycloaliphatic acid ammonium salt;
- a tot al content of the (hydrogen) carbonate and the hetero-cycloaliphatic acid ammonium salt being greater than 10 phr.

The various components above are described in detail below.

4.1. Diene elastomer

It should be remembered that elastomer (or rubber, the two terms being synonymous) of the "diene" type should be understood to mean an elastomer resulting at least in part (i.e., a homopolymer or a copolymer) from diene monomers (monomers bearing two conjugated or unconjugated carbon-carbon double bonds).

Diene elastomers can be classified in a known way into two categories: those said to be "essentially unsaturated" and those said to be "essentially saturated". Butyl rubbers, and also for example diene/ $\alpha$ -olefin copolymers of the EPDM type, come within the category of essentially saturated diene elastomers, having a content of units of diene origin which is low or very low, always less than 15% (mol%). In contrast, the expression "essentially unsaturated diene elastomer" is understood to mean a diene elastomer resulting at least in part from conjugated diene monomers, having a content of units of diene origin (conjugated dienes) that is greater than 15% (mol%). In the category of "essentially unsaturated" diene elastomers, the expression "highly unsaturated diene elastomer" is understood to mean in particular a diene elastomer having a content of units of diene origin (conjugated dienes) that is greater than 50%.

It is preferable to use at least one diene elastomer of the highly unsaturated type, in particular a diene elastomer selected from the group consisting of natural rubber (NR), synthetic polyisoprenes (IRs), polybutadienes (BRs), butadiene copolymers, isoprene copolymers and the mixtures of these elastomers. Such copolymers are more preferably selected from the group consisting of butadiene/styrene copolymers (SBRs), isoprene/butadiene copolymers (BIRs), isoprene/styrene copolymers (SIRs), isoprene/butadiene/styrene copolymers (SBIRs) and the mixtures of such copolymers.

The elastomers can, for example, be block, statistical, sequential or microsequential elastomers and can be prepared in dispersion or in solution; they can be coupled and/or star-branched or else functionalized with a coupling and/or star-branching or functionalization agent. Mention may be made, for example, for coupling to carbon black, of functional groups comprising a C-Sn bond or aminated functional groups, such as benzophenone, for example; mention may be made, for example, for coupling to a reinforcing inorganic filler, such as silica, of silanol functional groups or polysiloxane functional groups having a silanol end (such as described, for example, in US 6 013 718), alkoxysilane groups (such as described, for example, in US 5 977 238), carboxyl groups (such as described, for example, in US 6 815 473 or US 2006/0089445) or else polyether groups (such as described, for example, in US 6 503 973). Mention may also be made, as other examples of such functionalized elastomers, of elastomers (such as SBR, BR, NR or IR) of the epoxidized type.

The following are preferably suitable: polybutadienes, in particular those having a content of 1,2- units of between 4% and 80% or those having a content of cis-1,4-units of greater than 80%, polyisoprenes, butadiene/styrene copolymers and in particular those having a styrene content of between 5% and 50% by weight and more particularly between 20% and 40%, a content of 1,2- bonds of the butadiene part of between 4% and 65% and a content of trans-1,4- bonds of between 20% and 80%, butadiene/isoprene copolymers and especially those having an isoprene content of between 5% and 90% by weight and a glass transition temperature ("Tg", measured according to ASTM D3418-82) from -40°C to -80°C, or isoprene/styrene copolymers and especially those having a styrene content of between 5% and 50% by weight and a Tg of between -25°C and -50°C.

In the case of butadiene/styrene/isoprene copolymers, those having a styrene content of between 5% and 50% by weight and more particularly of between 10% and 40%, an isoprene content of between 15% and 60% by weight and more particularly between 20% and 50%, a butadiene content of between 5% and 50% by weight and more particularly of between 20% and 40%, a content of 1,2- units of the butadiene part of between 4% and 85%, a content of trans-1,4- units of the butadiene part of between 6% and 80%, a content of 1,2- plus 3,4- units of the isoprene part of between 5% and 70% and a content of trans-1,4- units of the isoprene part of between 10% and 50%, and more generally any butadiene/styrene/isoprene copolymer having a Tg of between -20°C and -70°C, are suitable in particular.

According to a particularly preferred embodiment of the invention, the diene elastomer is selected from the group consisting of natural rubber, synthetic polyisoprenes, polybutadienes having a content of cis-1,4- bonds of greater than 90%, butadiene/styrene copolymers and the mixtures of these elastomers.

According to a more particular and preferred embodiment, the heat-expandable rubber composition comprises from 50 to 100 phr of natural rubber or of synthetic polyisoprene, it being possible for said natural rubber or synthetic polyisoprene to be used in particular as a blend (mixture) with at most 50 phr of a polybutadiene having a content of cis-1,4- bonds of greater than 90%.

According to another particular and preferred embodiment, the heat-expandable rubber composition comprises from 50 to 100 phr of a polybutadiene having a content of cis-1,4- bonds of greater than 90%, it being possible for said polybutadiene to be used in particular as a blend with at most 50 phr of natural rubber or synthetic polyisoprene.

Synthetic elastomers other than diene elastomers, or even polymers other than elastomers, for example thermoplastic polymers, may be combined, in a minority amount, with the diene elastomers of the treads according to the invention.

4.2. Reinforcing Filler

Use may be made of any filler known for its capabilities in reinforcing a rubber composition, for example an organic filler, such as carbon black, or also an inorganic filler, such as silica, with which may be combined, in a known way, a coupling agent.

Such a filler preferably consists of nanoparticles, the (weight-)average size of which is less than a micrometre, generally less than 500 nm, usually between 20 and 200 nm, in particular and more preferably between 20 and 150 nm.

Preferably, the content of total reinforcing filler (especially silica or carbon black or a mixture of silica and carbon black) is between 50 and 150 phr. A content of greater than or equal to 50 phr promotes good mechanical strength; beyond 150 phr, there exists a risk of excessive stiffness of the rubber composition. For these reasons, the content of total reinforcing filler is more preferably within a range from 70 to 120 phr.

Suitable as carbon blacks are, for example, all carbon blacks which are conventionally used in tires ("tire-grade" blacks), such as carbon blacks of the 100, 200 or 300 series (ASTM grades), such as, for example, the N115, N134, N234, N326, N330, N339, N347 or N375 blacks. The carbon blacks might, for example, be already incorporated in the diene elastomer, in particular isoprene elastomer, in the form of a masterbatch (see, for example, Applications WO 97/36724 or WO 99/16600).

Mention may be made, as examples of organic fillers other than carbon blacks, of functionalized polyvinyl organic fillers, such as described in Applications WO-A-2006/069792, WO-A-2006/069793, WO-A-2008/003434 and WO-A-2008/003435.

"Reinforcing inorganic filler" should be understood here as meaning any inorganic or mineral filler, whatever its colour and its origin (natural or synthetic), also known as "white filler", "clear filler" or even "non-black filler", in contrast to carbon black, capable of reinforcing by itself alone, without means other than an intermediate coupling agent, a rubber composition intended for the manufacture of tires, in other words capable of replacing, in its reinforcing role, a conventional tire-grade carbon black; such a filler is generally characterized, in a known way, by the presence of hydroxyl (-OH) groups at its surface.

Mineral fillers of the siliceous type, especially silica ($SiO_2$), are suitable in particular as reinforcing inorganic fillers. The silica used can be any reinforcing silica known to a person skilled in the art, in particular any precipitated or fumed silica exhibiting a BET surface area and a CTAB specific surface area both of less than 450 $m^2/g$, preferably from 30 to 400 $m^2/g$, in particular between 60 and 300 $m^2/g$. Mention will be made, as highly dispersible precipitated silicas (HDSs), for example, of the Ultrasil 7000 and Ultrasil 7005 silicas from Evonik, the Zeosil 1165MP, 1135MP and 1115MP silicas from Rhodia, the Hi-Sil EZ150G silica from PPG or the Zeopol 8715, 8745 and 8755 silicas from Huber.

According to another particularly preferred embodiment, use is made, as predominant filler, of a reinforcing inorganic filler, in particular silica, at a content within a range from 70 to 120 phr, to which reinforcing inorganic filler can advantageously be added carbon black at a minor content at most equal to 15 phr, in particular within a range from 1 to 10 phr.

In order to couple the reinforcing inorganic filler to the diene elastomer, use is made, in a known way, of an at least bifunctional coupling agent (or bonding agent) intended to provide a satisfactory connection, of chemical and/or

physical nature, between the inorganic filler (surface of its particles) and the diene elastomer. Use is made in particular of at least bifunctional organosilanes or polyorganosiloxanes.

Use is made in particular of silane polysulphides, referred to as "symmetrical" or "unsymmetrical" depending on their specific structure, such as described, for example, in Applications WO 03/002648 (or US 2005/016651) and WO 03/002649 (or US 2005/016650).

Particularly suitable, without the definition below being limiting, are silane polysulphides corresponding to the following general formula (I):

(I) $Z - A - S_x - A - Z$, in which:

- x is an integer from 2 to 8 (preferably from 2 to 5);
- the A symbols, which are identical or different, represent a divalent hydrocarbon radical (preferably a $C_1$-$C_{18}$ alkylene group or a $C_6$-$C_{12}$ arylene group, more particularly a $C_1$-$C_{10}$, in particular $C_1$-$C_4$, alkylene, especially propylene);
- the Z symbols, which are identical or different, correspond to one of the three formulae below:

[Chem. 1]

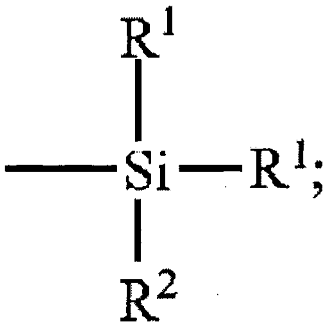
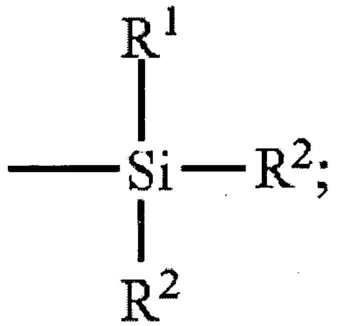
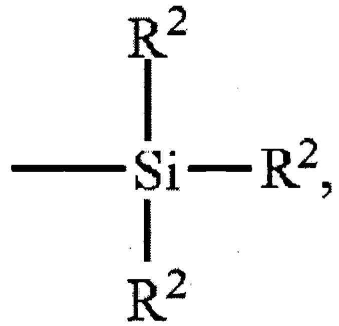

in which:

- the $R^1$ radicals, which are substituted or unsubstituted and identical to or different from one another, represent a $C_1$-$C_{18}$ alkyl, $C_5$-$C_{18}$ cycloalkyl or $C_6$-$C_{18}$ aryl group (preferably $C_1$-$C_6$ alkyl, cyclohexyl or phenyl groups, in particular $C_1$-$C_4$ alkyl groups, more particularly methyl and/or ethyl);
- the $R^2$ radicals, which are substituted or unsubstituted and identical to or different from one another, represent a $C_1$-$C_{18}$ alkoxyl or $C_5$-$C_{18}$ cycloalkoxyl group (preferably a group selected from $C_1$-$C_8$ alkoxyls and $C_5$-$C_8$ cycloalkoxyls, more preferably still a group selected from $C_1$-$C_4$ alkoxyls, in particular methoxyl and ethoxyl).

In the case of a mixture of alkoxysilane polysulphides corresponding to the above formula (I), in particular normal commercially available mixtures, the mean value of the "x" indices is a fractional number preferably of between 2 and 5, more preferably of approximately 4. However, the invention can also advantageously be carried out, for example, with alkoxysilane disulphides (x = 2).

Mention will more particularly be made, as examples of silane polysulphides, of bis(($C_1$-$C_4$)alkoxyl($C_1$-$C_4$)alkylsilyl($C_1$-$C_4$)alkyl) polysulphides (in particular disulphides, trisulphides or tetrasulphides), such as, for example, bis(3-trimethoxysilylpropyl) or bis(3-triethoxysilylpropyl) polysulphides. Use is in particular made, among these compounds, of bis(3-triethoxysilylpropyl) tetrasulphide, abbreviated to TESPT, of formula $[(C_2H_5O)_3Si(CH_2)_3S_2]_2$, or bis(triethoxysilylpropyl) disulphide, abbreviated to TESPD, of formula $[(C_2H_5O)_3Si(CH_2)_3S]_2$. Mention will also be made, as preferred examples, of bis(mono($C_1$-$C_4$)alkoxyldi($C_1$-$C_4$)alkylsilylpropyl) polysulphides (in particular disulphides, trisulphides or tetrasulphides), more particularly bis(monoethoxydimethylsilylpropyl) tetrasulphide, such as described in the abovementioned Patent Application WO 02/083782 (or US 7 217 751).

Mention will in particular be made, as examples of coupling agents other than an alkoxysilane polysulphide, of bifunctional POSs (polyorganosiloxanes), or else of hydroxysilane polysulphides ($R^2$ = OH in the above formula I), such as described, for example, in Patent Applications WO 02/30939 (or US 6 774 255), WO 02/31041 (or US 2004/051210) and WO 2007/061550, or else of silanes or POSs bearing azodicarbonyl functional groups, such as described, for example, in Patent Applications WO 2006/125532, WO 2006/125533 and WO 2006/125534.

Mention will be made, as examples of other silane sulphides, for example, of the silanes bearing at least one thiol (-SH) function (referred to as mercaptosilanes) and/or at least one masked thiol function, such as described, for example, in Patents or Patent Applications US 6 849 754, WO 99/09036, WO 2006/023815 and WO 2007/098080.

Of course, use might also be made of mixtures of the coupling agents described above, as described in particular in the abovementioned Application WO 2006/125534.

When they are reinforced with an inorganic filler, such as silica, the rubber compositions preferably comprise between 2 and 15 phr, more preferably between 3 and 12 phr, of coupling agent.

4.3. Blowing agent and associated activator

The invention has the essential feature of comprising, in combination, at particularly high contents, on the one hand, as blowing agent, a carbonate and/or a hydrogen carbonate, and on the other hand, as blowing activator, a hetero-cycloaliphatic acid ammonium salt.

In a well-known way, a blowing agent is a compound which can decompose thermally and which is intended to release, during thermal activation, for example during the vulcanization of the tire, a large amount of gas and to thus result in the formation of bubbles. The release of gas in the rubber composition thus originates from this thermal decomposition of the blowing agent.

The blowing agent used in accordance with the present invention is a carbonate or a hydrogen carbonate (also referred to as bicarbonate) of sodium or of potassium. In other words, the blowing agent is selected from the group consisting of sodium carbonate, sodium hydrogen carbonate, potassium carbonate, potassium hydrogen carbonate and the mixtures of such compounds (including, of course, their hydrated forms).

Such a blowing agent has the advantage of only giving off carbon dioxide and water during its decomposition; it is thus particularly favorable to the environment. Use is made in particular of sodium hydrogen carbonate ($NaHCO_3$).

The content of this blowing agent is between 3 and 30 phr, preferably between 3 and 25 phr, more preferably between 5 and 20 phr, still more preferably between 5 and 15 phr.

Another essential feature of the invention is to add, to the blowing agent described above, between 3 and 60 phr of a hetero-cycloaliphatic acid ammonium salt. Below the indicated minimum, the targeted technical effect is insufficient. Above the indicated maximum, there is a risk to meet difficulty to control the induction period (that is to say, the time necessary at the start of the vulcanization reaction) during the curing of the composition. For these reasons, the content of this hetero-cycloaliphatic acid ammonium salt is preferably between 3 and 40 phr, more preferably between 5 and 25 phr, still more preferably within a range between 5 and 10 phr. By dispersing homogeneously in the composition, during its activation by the temperature, this hetero-cycloaliphatic acid ammonium salt has the role of chemically reacting with the blowing agent which, during its thermal decomposition, will thus release many more bubbles of gas ($CO_2$ and $H_2O$) than if it were used alone.

A few definitions will firstly be recalled here:

- "cycloaliphatic" means a saturated or unsaturated (preferably saturated), non-aromatic hydrocarbon moiety having from 3 to 20 carbon atoms (preferably from 4 to 18 carbon atoms), the moiety having and/or forming (preferably forming) from 1 to 8 (preferably 1 to 6) rings, wherein each of the rings has from 3 to 12 (preferably 4 to 8) carbon atoms, wherein if number of the rings which the moiety forms is at least 2, at least 2 of the carbon atoms forming one of the rings also form or do not form (preferably form) from 1 to 3 of the other ring(s), that is, the moiety is a bridged cyclic hydrocarbon moiety or a non-bridged hydrocarbon moiety (preferably, the bridged cyclic hydrocarbon moiety);
- "hetero-cycloaliphatic" is understood to mean the cycloaliphatic moiety wherein, in at least one ring thereof, from 1 to 6 carbons (preferably 2 to 4) have been replaced with a heteroatom (for example by nitrogen atom, oxygen atom or sulphur atom, preferably nitrogen atom) different to carbon atom, wherein the ring is a hetero-cycloaliphatic ring and a number of the hetero-cycloaliphatic ring(s) is from 1 to 8 (preferably 1 to 6), wherein if the number of the hetero-cycloaliphatic rings is at least 2, at least one of the heteroatom(s) forming one of the rings also forms or does not form (preferably form) from 1 to 3 of the other ring(s);
- an acid salt is understood, generally and in a well-known manner, to mean the product resulting from the partial reaction between a polyacid (or polyprotic acid), whether it is organic or inorganic, and a base; in such an acid, consequently and by definition, at least one (that is to say one or more) acid function is still present;
- a hetero-cycloaliphatic acid ammonium salt is understood to mean the acid salt comprising the hetero-cycloaliphatic moiety (moieties) having and/or forming (preferably forming) any derivative of the ammonium ion $NH4^+$ in which 1, 2 or 3 hydrogen atoms have been replaced (for example by alkyls, cycloalkyl or heterocycloalkyl or aryls) and therefore in which at least one hydrogen atom (that is to say 1, 2 or 3 hydrogen atoms, preferably 2 or 3 hydrogen atoms) still remains. Such replacement has created a primary, secondary, tertiary ammonium salt. The remaining proton (H+) composing the ammonium ion $NH4^+$ can act as a weak acid.

Preferably, the hetero-cycloaliphatic acid ammonium salt comprises at least two carbon atoms and at least two nitrogen atoms.

More preferably, the hetero-cycloaliphatic acid ammonium salt comprises the hetero-cycloaliphatic ring(s) comprising the carbon atoms and the nitrogen atoms (as the hetero atom). Still more preferably, at least one of the nitrogen atoms forming the hetero-cycloaliphatic ring(s) also forms the derivative of the ammonium ion $NH4^+$ in which two or three hydrogen atoms have been replaced (for example by alky, cycloalkyl or heterocycloalkyl) and therefore in which one or two hydrogen atoms still remain, that is, the hetero-cycloaliphatic moiety which the hetero-cycloaliphatic ring(s) forms and which the hetero-cycloaliphatic acid ammonium salt comprises is a hetero-cycloaliphatic amine.

A ratio of the number of carbon atoms to the number of the nitrogen atoms in the hetero-cycloaliphatic acid ammonium salt, notably in the hetero-cycloaliphatic ring, is preferably at most 4.0 (more preferably at most 3.0, still more preferably at most 2.0) in order to increase the flash point and/or the boil point of the hetero-cycloaliphatic acid ammonium salt, and to enhance a safety when producing and/or using the rubber composition according to the present invention. Likewise, the number of nitrogen atoms is preferably from 2 to 8, more preferably 2 to 6. These preferable ranges may be applied to any one of the embodiments of the invention.

According to a specific embodiment, the hetero-cycloaliphatic acid ammonium salt comprises at least, an acid and a hetero-cycloaliphatic amine, the hetero-cycloaliphatic amine comprising at least a hetero-cycloaliphatic ring, the hetero-cycloaliphatic ring comprising at least 2 carbon atoms and at least 2 nitrogen atoms, notably, at least one of the nitrogen atom composes the derivative of the ammonium ion $NH4^+$ in which 2 or 3 hydrogen atoms have been replaced (for example by alky, cycloalkyl or heterocycloalkyl) and therefore in which one or two hydrogen atom still remains. The hetero-cycloaliphatic amine has higher pKa (measured at 25°C and 100 kPa in water) than that of the acid. The acid may be mineral acid or organic acid. The pKa of the hetero-cycloaliphatic amine is preferably between 2 and 11, more preferably between 3 and 8, still more preferably within a range from 4 to 5. The hetero-cycloaliphatic amine is preferably a hetero-cycloaliphatic tertiary amine (for example, 1,4-Dimethylpiperazine (N,N'-Dimethylpiperazine), 1,3,5-Trimethylhexahydro-1,3,5-triazine), more preferably a hetero-cycloaliphatic tertiary bridgehead amine (for example, 1,3-Diazabicyclo[1.1.1]pentane, 1,3,5,7-Tetraazatricyclo[3.3.1.13,7]decane (hexamethylenetetramine), 1,3,5-Triazatetracyclo[3.3.1.03,9.07,9]nonane (9CI), 1,3,6,8-Tetraazatricyclo[4.4.1.13,8]dodecane (TATD), 1,3,6,8-tetraazatricyclo[6.2.1.13,6]dodecan (Dimtac), 1,4-diazabicyclo[2.2.2]octane (commercially available under a trade name of DABCO), 3-piperazin-1-yl-1-azabicyclo[2.2.2]octane), still more preferably the hetero-cycloaliphatic tertiary bridgehead amine chosen from the group consisting of hexamethylenetetramine, 1,4-diazabicyclo[2.2.2]octane and a mixture thereof because they have better availability than other hetero-cycloaliphatic tertiary bridgehead amines, and particularly hexamethylenetetramine because it has clear advantage in safety and it has higher flash point than another. The hetero-cycloaliphatic acid ammonium salts comprising hexamethylenetetramine are well known, are produced with a method described in patent application US3936451 A, and are available commercially, for example known as Methenamine mandelate (hexamethylenetetramine mandelate salt) and hexamethylenetetramine hydroiodide.

According to another specific embodiment, the hetero-cycloaliphatic acid ammonium salt comprises at least a hetero-cycloaliphatic amine having one proton ($H^+$), preferably within a range from 1 to 3 protons (for example, hexamethylenetetramine mandelate salt, hexamethylenetetramine hydroiodide, 1,3,5,7-tetraazatricyclo[3.3.1.13,7] decane trichloroacetate (hexamethylenetetramine trichloroacetic acid), 1,3,5,7-tetraazatricyclo[3.3.1.13,7] decane di-trichloroacetic acid (hexamethylenetetramine ditrichloroacetic acid), 1,4-diazabicyclo[2.2.2]octane dihydrochloric acid (1,4-diazabicyclo[2.2.2]octane dihydrochloric acid), 1,4-dimethylpiperazine dihydrochloride (N,N'-Dimethylpiperazine dihydrochloride, 1-Azabicyclo[2.2.2]octane, 3-(1-piperazinyl)-, trihydrochloride).

Another essential feature of the invention, for obtaining an optimized grip of the tread on melting ice, is that the total amount of blowing agent and of its associated activator must be greater than 10 phr(preferably between 10 and 80 phr, more preferably between 10 and 60phr). This total amount is still more preferably greater than 15 phr, in particular between 15 and 40 phr, in more particular between 15 and 20 phr.

4.4. Various additives

The heat-expandable rubber composition can also comprise all or some of the usual additives customarily used in rubber compositions for tire treads, such as, for example, protective agents, such as antiozone waxes, chemical antiozonants, antioxidants, plasticizing agents, a crosslinking system based either on sulphur or on sulphur donors and/or on peroxide and/or on bismaleimides, vulcanization accelerators or vulcanization activators.

According to a preferred embodiment, the heat-expandable rubber composition also comprises a liquid plasticizing agent (liquid at 20°C), the role of which is to soften the matrix by diluting the diene elastomer and the reinforcing filler; its Tg (glass transition temperature) is, by definition, less than -20°C, preferably less than -40°C.

Any extending oil, whether of aromatic or non-aromatic nature, any liquid plasticizing agent known for its plasticizing properties with regard to diene elastomers, can be used. At ambient temperature (20°C), these plasticizers or these oils, which are more or less viscous, are liquids (that is to say, as a reminder, substances which have the ability to eventually assume the shape of their container), in contrast in particular to plasticizing hydrocarbon resins, which are by nature solids at ambient temperature.

According to one particular embodiment of the invention, the liquid plasticizer is in particular a petroleum oil, preferably a non-aromatic petroleum oil. A liquid plasticizer is described as non-aromatic when it exhibits a content of polycyclic aromatic compounds, determined with the extract in DMSO according to the IP 346 method, of less than 3% by weight, with respect to the total weight of the plasticizer.

Liquid plasticizers selected from the group consisting of naphthenic oils (low- or high-viscosity, in particular hydrogenated or non-hydrogenated), paraffinic oils, MES (Medium Extracted Solvates) oils, DAE (Distillate Aromatic Extract) oils, TDAE (Treated Distillate Aromatic Extract) oils, RAE (Residual Aromatic Extract) oils, TRAE (Treated Residual Aromatic Extract) oils, SRAE (Safety Residual Aromatic Extract) oils, mineral oils, vegetable oils, ether plasticizers, ester plasticizers, phosphate plasticizers, sulphonate plasticizers and the mixtures of these compounds are particularly suitable. According to a more preferred embodiment, the liquid plasticizing agent is selected from the group consisting of MES oils, TDAE oils, naphthenic oils, vegetable oils and the mixtures of these oils.

Mention may be made, as phosphate plasticizers for example, of those that contain between 12 and 30 carbon atoms, for example trioctyl phosphate. Mention may in particular be made, as examples of ester plasticizers, of the compounds selected from the group consisting of trimellitates, pyromellitates, phthalates, 1,2-cyclohexanedicarboxylates, adipates, azelates, sebacates, glycerol triesters and the mixtures of these compounds. Among the above triesters, mention may especially be made of glycerol triesters, preferably consisting predominantly (of more than 50%, more preferably of more than 80% by weight) of an unsaturated $C_{18}$ fatty acid, i.e. selected from the group consisting of oleic acid, linoleic acid, linolenic acid and mixtures of these acids. More preferably, whether it is of synthetic origin or natural origin (the case for example for sunflower or rapeseed vegetable oils), the fatty acid used consists of more than 50% by weight, more preferably still more than 80% by weight, of oleic acid. Such triesters (trioleates) having a high content of oleic acid are well known; they have been described for example in Application WO 02/088238 as plasticizing agents in tire treads.

In the case where it is desired to increase the stiffness of the tread once blown, without, however, reducing the content of liquid plasticizer above, reinforcing resins (e.g., methylene acceptors and donors), such as described, for example, in WO 02/10269 or US 7 199 175, can advantageously be incorporated.

The heat-expandable rubber composition may also contain coupling activators when a coupling agent is used, agents for covering the inorganic filler when an inorganic filler is used, or more generally processing aids capable, in a known manner, owing to an improvement of the dispersion of the filler in the rubber matrix and to a lowering of the viscosity of the compositions, of improving their processability in the uncured state; these agents are, for example, hydrolysable silanes or hydroxysilanes such as alkylalkoxysilanes, polyols, polyethers, amines or hydroxylated or hydrolysable polyorganosiloxanes.

4.5. Manufacture of the compositions

The rubber compositions are manufactured in appropriate mixers, for example using two successive phases of preparation according to a general procedure known to a person skilled in the art: a first phase of thermomechanical working or kneading (sometimes referred to as "non-productive" phase) at high temperature, up to a maximum temperature of between 130°C and 200°C, preferably between 145°C and 185°C, followed by a second phase of mechanical working (sometimes referred to as "productive" phase) at low temperature, typically below 120°C, preferably between 20°C and 100°C, more preferably between 30°C and 70°C, during which finishing phase the blowing agent, the blowing activator (hetero-cycloaliphatic acid ammonium salt) and the crosslinking or vulcanization system are incorporated.

A process which can be used for the manufacture of such rubber compositions comprises, for example and preferably, the following stages:

- in a mixer, incorporating into the elastomer or into the mixture of elastomers, at least the filler, everything being kneaded thermomechanically, in one or more steps, until a maximum temperature of between 130°C and 200°C is reached;
- cooling the combined mixture to a temperature of less than 100°C;
- then incorporating the blowing agent (carbonate or hydrogen carbonate of Na or K) and the blowing activator (hetero-cycloaliphatic acid ammonium salt) into the mixture thus obtained and cooled, everything being kneaded thermomechanically until a maximum temperature of less than 100°C is reached;
- subsequently incorporating a crosslinking system;
- kneading everything up to a maximum temperature of less than 120°C;
- extruding or calendering the rubber composition thus obtained.

By way of example, all the necessary constituents, the optional supplementary covering agents or processing aids and various other additives, with the exception of the blowing agent, the blowing activator and the crosslinking system, are introduced, during the first non-productive phase, into an appropriate mixer, such as a standard internal

mixer. After thermomechanical working, dropping and cooling of the mixture thus obtained, the blowing agent, the blowing activator, then the vulcanization retarder (if such a compound is used) and, finally, the remainder of the vulcanization system (e.g. sulphur and accelerator), at low temperature, are then incorporated, preferably in this order, generally in an external mixer, such as an open mill; everything is then mixed (productive phase) for a few minutes, for example between 5 and 15 min.

The crosslinking system proper is preferably based on sulphur and on a primary vulcanization accelerator, in particular on an accelerator of the sulphenamide type. Added to this vulcanization system are various known secondary vulcanization accelerators or vulcanization activators, such as zinc oxide, stearic acid, guanidine derivatives (in particular diphenylguanidine), and the like, incorporated during the first non-productive phase and/or during the productive phase. The sulphur content is preferably between 0.5 and 5 phr and the content of the primary accelerator is preferably between 0.5 and 8 phr.

Use may be made, as (primary or secondary) accelerator, of any compound capable of acting as accelerator for the vulcanization of diene elastomers in the presence of sulphur, in particular accelerators of the thiazole type, and also their derivatives, and accelerators of thiuram and zinc dithiocarbamate types. These accelerators are, for example, selected from the group consisting of 2-mercaptobenzothiazyl disulphide (abbreviated to "MBTS"), tetrabenzylthiuram disulphide ("TBZTD"), N-cyclohexyl-2-benzothiazyl sulphenamide ("CBS"), N,N-dicyclohexyl-2-benzothiazyl sulphenamide ("DCBS"), N-(tert-butyl)-2-benzothiazyl sulphenamide ("TBBS"), N-(tert-butyl)-2-benzothiazyl sulphenimide ("TBSI"), zinc dibenzyldithiocarbamate ("ZBEC") and the mixtures of these compounds.

As the hetero-cycloaliphatic acid ammonium salt has, as possible effect, that of reducing the induction period during the curing of the composition, a vulcanization retarder, which makes it possible to counteract this phenomenon and to thus provide the rubber composition with the time necessary for complete expansion before the vulcanization thereof, can advantageously be used.

The content of this vulcanization retarder is preferably between 0.5 and 10 phr, more preferably between 1 and 5 phr, in particular between 1 and 3 phr.

Vulcanization retarders are well known to a person skilled in the art. Mention may be made, for example, of N-cyclohexylthiophthalimide, sold under the name "Vulkalent G" by Lanxess, N-(trichloromethylthio)benzenesulphonamide, sold under the name "Vulkalent E/C" by Lanxess, or also phthalic anhydride, sold under the name "Vulkalent B/C" by Lanxess. Preferably, N-cyclohexylthiophthalimide (abbreviated to "CTP") is used.

The final composition thus obtained is subsequently calendered, for example in the form of a sheet or a slab, in particular for laboratory characterization, or else calendered or extruded in the form of a heat-expandable tread.

In the uncured (i.e. unvulcanized) and thus unexpanded state, the density, denoted $D_1$, of the heat-expandable rubber composition is preferably between 1.000 and 1.400 g/cm$^3$, more preferably between 1.050 and 1.400 g/cm$^3$, still more preferably between 1.100 and 1.400 g/cm$^3$, particularly preferably within a range from 1.150 to 1.350 g/cm$^3$.

The vulcanization (or curing) is carried out in a known way at a temperature generally of between 130°C and 200°C, for a sufficient time which can vary, for example, between 5 and 90 min, as a function in particular of the curing temperature, of the vulcanization system adopted and of the kinetics of vulcanization of the composition under consideration.

It is during this vulcanization stage that the blowing agent will release a large amount of gas, to result in the formation of bubbles in the foam rubber composition and finally in its expansion.

In the cured (i.e. vulcanized) state, the density, denoted $D_2$, of the rubber composition once expanded (i.e. in the foam rubber state) is preferably between 0.500 and 1.000 g/cm$^3$, more preferably 0.600 and 1.000 g/cm$^3$ still more preferably between 0.700 and 1.000 g/cm$^3$, particularly within a range from 0.750 to 0.950 g/cm$^3$.

Its degree of expansion by volume, denoted $T_E$ (expressed as %), is preferably between 20% and 100%, more preferably between 20% and 90%, still more preferably between 20% and 75%, particularly within a range from 25% to 60%, this degree of expansion $T_E$ being calculated in a known way from the above densities $D_1$ and $D_2$, as follows:

$$T_E = [(D_1/D_2) - 1] \times 100.$$

Various known methods are applicable for the measurement of the above density (specific gravity). For example, immersion method, liquid pycnometer method and titration method (see, for example ISO-1183, ASTM D792).

The invention is further illustrated by the following non-limiting examples.

[Examples]

5. EXEMPLARY EMBODIMENTS OF THE INVENTION

The heat-expandable rubber composition described previously can advantageously be used in the treads of winter tire for any type vehicle, in particular in tires for passenger vehicles, as demonstrated in the following tests.

For the requirements of these tests, firstly six rubber compositions (denoted C-1, C-2, C-3, C-4, C-5 and C-6) were prepared, the formulations of which are given in Table 1 (contents of the various products expressed in phr). The six compositions based on diene elastomer (BR/NR) are reinforced with a blend of silica and carbon black, comprise sodium bicarbonate as the blowing agent, and citric acid, a hetero-cycloaliphatic amine or a hetero-cycloaliphatic acid ammonium salt as the blowing activator. The six compositions further comprise various other ingredients:

- Composition C-1: with 4.5 phr of the citric acid (reference);
- Composition C-2: with 9.4 phr of a hexamethylenetetramine as the hetero-cycloaliphatic amine (comparative example);
- Composition C-3: with 4.7 phr of the hexamethylenetetramine (another comparative example);
- Composition C-4: composition according to the present invention with 20.4 phr of a hexamethylenetetramine trichloroacetic acid as the hetero-cycloaliphatic acid ammonium salt, synthesized with 9.4 phr of the hexamethylenetetramine and 11 phr of a trichloroacetic acid (Wako Chemicals), wherein the content of the trichloroacetic acid theoretically has equivalent modular number of hydrogen ions to that of the above citric acid;
- Composition C-5: composition according to the present invention with 15.7 phr of a hexamethylenetetramine ditrichloroacetic acid as the hetero-cycloaliphatic acid ammonium salt, synthesized with 4.7 phr of the hexamethylenetetramine and 11.0 phr of the trichloroacetic acid;
- Composition C-6: composition according to the present invention with 8.0 phr of the above hexamethylenetetramine ditrichloroacetic acid in order to maintain the stiffness, after curing at the same level as that of the reference composition C-1 (Shore A hardness equal to around 42 ± 0.2, measured in accordance with the standard ASTM D2240-86).

A method to produce the hexamethylenetetramine trichloroacetic acid or the hexamethylenetetramine di-trichloroacetic acid as the hetero-cycloaliphatic acid ammoniums salt used for the examples (C-4, C-5 and C-6), is explained hereafter.

The hexamethylenetetramine was dissolved in chloroform in order to make a chloroform solution with 6% by weight of the hexamethylenetetramine. The trichloroacetic acid was also dissolved in chloroform in order to make another chloroform solution with 35% by weight of the trichloroacetic acid. Then an appropriate amount of the trichloroacetic acid solution was dropped into the hexamethylenetetramine solution at room temperature (about 25 °C) in order to obtain a precipitate. The precipitate was filtered out and washed in chloroform in order to remove unreacted chemical, and was dried up in air in order to obtain each of the hetero-cycloaliphatic acid ammoniums salts. Each can be determined by a titration amount of the trichloroacetic acid solution.

The following procedure was then used for the manufacture of the rubber compositions: the reinforcing filler, the diene elastomer (NR and BR blend) and the various other ingredients, with the exception of the vulcanization system, the blowing agent and the blowing activator, were successively introduced into an internal mixer, the initial vessel temperature of which was approximately 60°C; the mixer was thus filled to approximately 70% (% by volume). Thermomechanical working (non-productive phase) was then carried out in a stage of approximately 2 to 4 min, until a maximum "dropping" temperature of approximately 150°C was reached. The mixture thus obtained was recovered and cooled to approximately 50°C and then the blowing agent (sodium hydrogen carbonate), the blowing activator, the vulcanization retarder (CTP), subsequently the sulphenamide accelerator and the sulphur were incorporated on an external mixer (homofinisher) at 30°C, everything being mixed (productive phase) for a few minutes.

The six compositions (C-1, C-2, C-3, C-4, C-5 and C-6) thus prepared, directly usable as treads for passenger vehicle winter tires, were then vulcanized in a press, and their properties were before and after curing (see appended Table 2) as explained below.

Firstly, the Rheometry measurements are carried out at 150°C with an oscillating disc rheometer, according to Standard DIN 53529 - part 3 (June 1983). The change in the rheometric torque as a function of time describes the change in the stiffening of the composition as a result of the vulcanization reaction. The measurements are processed according to Standard DIN 53529 - part 2 (March 1983): $T_i$ is the induction period, that is to say the time necessary for the start of the vulcanization reaction; $T_\alpha$ (for example $T_{99}$) is the time necessary to achieve a conversion of $\alpha$ %, that is to say $\alpha$ % (for example 99%) of the difference between the minimum and maximum torques.

Table 2 shows that the compositions (C-4, C-5 and C-6) according to the present invention have significantly shorter curing time (that is $T_{99}$-$T_i$) than that of the reference (C-1).

Table 2 also indicates that the compositions (C-4, C-5), which theoretically comprises equivalent modular number of hydrogen ions to that of the reference (C-1), have, after curing, once in the foam rubbers (i. e. expanded) state, a significantly reduced density corresponding to a particularly higher degree of expansion by volume of 77% or 95% than that of the reference (C-1). The density of each rubber composition was measured by the immersion method in accordance with ISO-1183.

In Table 2, differences between the C-2 and the C-4 (or between the C-3 and the C-5) indicate that the hetero-cycloaliphatic acid ammonium salt according to the invention makes curing time of the rubber composition effectively shorter and significantly higher expansion ratio than the hetero-cycloaliphatic amine.

The two compositions (C-1 and C-6) having Shore A hardness equal to around 42 $\pm$ 0.2 were then subjected to a laboratory test consisting in measuring their friction coefficient on ice.

The principle is based on a block of rubber composition that slides at a given speed (for example equal to 5 km/h) over an ice track (temperature of the ice set at -2°C) with an imposed load (for example equal to 3 $kg/cm^2$). The forces generated in the direction of travel (Fx) of the pad and perpendicular to the travel (Fz) are measured; the ratio Fx/Fz determines the friction coefficient of the test specimen on ice. The surfaces of blocks of rubber compositions (C-1 and C-6), which contacted on the ice, had been cut a thin slice of the rubber by approximately 1mm before the friction test in order to expose bubbles at the surface.

The principle of this test is well known to person skilled in the art (see for example Patent Applications EP 1 052 270, EP 1 505 112 and WO 2010/009850). That makes it possible to evaluate, under representative conditions, the grip on melting ice that would be obtained during a running test on a vehicle equipped with tires whose tread consists of the same rubber compositions

The results are expressed in Table 3, a value greater than that of the reference composition (C-1), arbitrarily set at 100, indicating an improved result, i.e. an aptitude for a shorter braking distance.

The results from Table 3 demonstrate that the composition C-6 according to the invention has equivalent or slightly improved ice friction coefficient to that of the reference composition C-1, and the use of the hetero-cycloaliphatic acid ammonium salt as the specific blowing activator makes it possible at least to maintain a good grip of the tire tread on melting ice.

In addition, the rubber composition of the invention thus formulated, based on high contents of a blowing agent and a specific activator combined, makes it possible to greatly shorten curing time of the rubber composition.

[Table 1]

| Rubber Composition No.: | Ref. | Comparative examples | | Examples of the invention | | |
|---|---|---|---|---|---|---|
| | C-1 | C-2 | C-3 | C-4 | C-5 | C-6 |
| BR (1) | 60 | 60 | 60 | 60 | 60 | 60 |
| NR (2) | 40 | 40 | 40 | 40 | 40 | 40 |
| Silica (3) | 80 | 80 | 80 | 80 | 80 | 80 |
| Coupling agent (4) | 6.4 | 6.4 | 6.4 | 6.4 | 6.4 | 6.4 |
| Carbon black (5) | 5 | 5 | 5 | 5 | 5 | 5 |
| Blowing agent (6) | 8 | 8 | 8 | 8 | 8 | 8 |
| Citric acid (7) | 4.5 | | | | | |
| Hetero-cycloaliphatic amine (8) | | 9.4 | 4.7 | | | |
| Hetero-cycloaliphatic acid ammonium salt A (9) | | | | 20.4 | | |
| Hetero-cycloaliphatic acid ammonium salt B (10) | | | | | 15.7 | 8.0 |
| Liquid plasticizer (11) | 40 | 40 | 40 | 40 | 40 | 40 |
| Hydrocarbon resin (12) | 14 | 14 | 14 | 14 | 14 | 14 |
| DPG (13) | 2 | 2 | 2 | 2 | 2 | 2 |
| ZnO | 1.5 | 1.5 | 1.5 | 1.5 | 1.5 | 1.5 |
| Stearic acid | 1 | 1 | 1 | 1 | 1 | 1 |
| Antiozone wax | 1.5 | 1.5 | 1.5 | 1.5 | 1.5 | 1.5 |
| Antioxidant (14) | 2 | 2 | 2 | 2 | 2 | 2 |
| Sulphur | 3 | 3 | 3 | 3 | 3 | 3 |

(continued)

| Rubber Composition No.: | Ref. | Comparative examples | | Examples of the invention | | |
|---|---|---|---|---|---|---|
| | C-1 | C-2 | C-3 | C-4 | C-5 | C-6 |
| Accelerator (15) | 3 | 3 | 3 | 3 | 3 | 3 |
| Retarder (16) | 3 | 3 | 3 | 3 | 3 | 3 |

[0155] (1) BR with 0.3% of 1,2-units, 2.7% of trans-1,4-units and 97% of cis-1,4-units (Tg = - 104°C);
(2) Natural rubber (peptized);
(3) Silica "Zeosil 1165MP" from Rhodia (CTAB, BET: about 160 $m^2/g$);
(4) Coupling agent TESPT ("Si69" from Evonik);
(5) Grade ASTM N234 (Cabot);
(6) Sodium bicarbonate (Median particle size by weight: 45 $\mu$m, provided by Sankyo Kasei, product name: Cellmic 266);
(7) Citric acid (Kanto Kagaku);
(8) Hexamethylenetetramine (Wako Chemicals);
(9) Hexamethylenetetramine trichloroacetic acid;
(10) Hexamethylenetetramine ditrichloroacetic acid;
(11) MES oil ("Catenex SNR" from Shell);
(12) Hydrocarbon resin C5/C9 type ("Escorez ECR-373" from Exxon);
(13) Diphenylguanidine ("Perkacit DPG" from Flexsys);
(14) N-(1,3-dimethylbutyl)-N-phenyl-para-phenylenediamine ("Santoflex 6-PPD" from Flexsys);
(15) N-dicyclohexyl-2-benzothiazolesulphenamide ("Santocure CBS" from Flexsys);
(16) CTP (N-cyclohexylthiophthalimide; Vulkalent G from Lanxess).

[Table 2]

| Rubber Composition No.: | Ref. | Comparative examples | | Examples of the invention | | |
|---|---|---|---|---|---|---|
| | C-1 | C-2 | C-3 | C-4 | C-5 | C-6 |
| $T_{99}$-$T_i$ (min) at 150°C | 30.0 | 13.6 | 11.4 | 7.8 | 8.4 | 13.7 |
| Density before curing ($g/cm^3$) | 1.169 | 1.133 | 1.159 | 1.158 | 1.103 | 1.169 |
| Density after curing ($g/cm^3$) | 0.825 | 1.099 | 1.082 | 0.656 | 0.567 | 0.914 |
| Expansion ratio (%) | 41 | 3 | 7 | 77 | 95 | 28 |

[Table 3]

| Rubber Composition No.: | Ref. | Examples of the invention |
|---|---|---|
| | C-1 | C-6 |
| Friction on ice (-2°C) | 100 | 101 |

## Claims

1. A heat-expandable rubber composition, comprising at least a diene elastomer, more than 50 phr of a reinforcing filler, between 3 and 30 phr of a carbonate and/or a hydrogen carbonate, wherein the carbonate or the hydrogen carbonate comprises sodium or potassium, and between 3 and 60 phr of a hetero-cycloaliphatic acid ammonium salt, wherein a total content of the carbonate or the hydrogen carbonate and the hetero-cycloaliphatic acid ammonium salt is greater than 10 phr.

2. The rubber composition according to Claim 1, wherein the diene elastomer is selected from the group consisting of natural rubber, synthetic polyisoprenes, polybutadienes, butadiene copolymers, isoprene copolymers and the mixtures of these elastomers.

**3.** The rubber composition according to Claim 2, wherein said rubber composition comprises from 50 to 100 phr of natural rubber or of synthetic polyisoprene, preferably the natural rubber or the synthetic polyisoprene being in a in a blend with at most 50 phr of a polybutadiene having a content of cis-1,4- bonds of greater than 90%.

**4.** The rubber composition according to Claim 2, wherein said composition comprises from 50 to 100 phr of a polybutadiene having a content of cis-1,4- bonds of greater than 90%, preferably the polybutadiene being in a a blend with at most 50 phr of natural rubber or a synthetic polyisoprene.

**5.** The rubber composition according to any one of Claims 1 to 4, wherein the reinforcing filler comprises an inorganic filler, carbon black or a mixture of inorganic filler and carbon black.

**6.** The rubber composition according to any one of Claims 1 to 5, wherein the hetero-cycloaliphatic acid ammonium salt comprises at least two nitrogen atoms and at least two carbon atoms, preferably the hetero-cycloaliphatic acid ammonium salt comprises at least a hetero-cycloaliphatic ring comprising the carbon atoms and the nitrogen atoms.

**7.** The rubber composition according to Claim 6, wherein the hetero-cycloaliphatic acid ammonium salt comprises at least a hetero-cycloaliphatic amine comprising the hetero-cycloaliphatic ring(s).

**8.** The rubber composition according to Claim 7, wherein a ratio of the number of the carbon atoms to the number of the nitrogen atoms in the hetero-cycloaliphatic amine is at most 4.0.

**9.** The rubber composition according to Claim 7 or Claim 8, wherein the hetero-cycloaliphatic amine is a hetero-cycloaliphatic tertiary amine.

**10.** The rubber composition according to Claim 9, wherein the hetero-cycloaliphatic tertiary amine is a hetero-cycloaliphatic bridgehead tertiary amine.

**11.** The rubber composition according to Claim 10, wherein the hetero-cycloaliphatic tertiary bridgehead amine is chosen from the group consisting of hexamethylenetetramine, 1,4-diazabicyclo[2.2.2]octane and mixtures thereof.

**12.** The rubber composition according to Claim 11, wherein the hetero-cycloaliphatic tertiary bridgehead amine is hexamethylenetetramine.

**13.** The rubber composition according to any one of Claims 1 to 12, wherein the rubber composition further comprises a vulcanization retarder.

**14.** A tire in the unvulcanized condition, comprising a heat expandable rubber composition according to any one of Claims 1 to 13.

**15.** A tire in the unvulcanized condition, comprising a tread comprising a heat expandable rubber composition according to any one of Claims 1 to 13.

**Patentansprüche**

**1.** Eine wärmeexpandierende Kautschukmischung, bestehend aus mindestens einem Dien-Elastomer, aus mehr als 50 phe-Anteilen eines verstärkenden Füllstoffs, aus 3 bis 30 phe-Anteilen eines Karbonats und / oder eines Hydrogenkarbonats, wobei das Karbonat oder das Hydrogenkarbonat, Natrium oder Kalium enthält, sowie aus 3 bis 60 phe-Anteilen eines heterocycloaliphatischen sauren Ammoniumsalzes, wobei der Gesamtgehalt des Karbonats bzw. des Hydrogenkarbonats und des heterocycloaliphatischen sauren Ammoniumsalzes mehr als 10 phe-Anteile beträgt.

**2.** Kautschukmischung gemäß Anspruch 1, **dadurch gekennzeichnet, dass** das Dien-Elastomer aus der Gruppe der Naturkautschuke, der synthetischen Polyisoprenen, der Polybutadien, der Butadien-Copolymere, der Isopren-Copolymere und einer Mischung aus diesen Elastomeren gewählt wird.

**3.** Kautschuk-Mischung gemäß Anspruch 2, **dadurch gekennzeichnet, dass** die besagte Kautschukmischung aus 50 bis 100 phe-Anteilen Naturkautschuk oder synthetischem Polyisopren besteht, wobei sich der Naturkautschuk

oder das synthetische Polyisopren vorzugsweise in einer Mischung mit höchstens 50 phe-Anteilen eines Polybutadiens mit einem Gehalt an cis-1,4-Bindungen von mehr als 90% befindet.

4. Kautschukmischung gemäß Anspruch 2, **dadurch gekennzeichnet, dass** die besagte Mischung aus 50 bis 100 phe-Anteilen an Polybutadien mit einem Gehalt an cis-1,4- Bindungen von mehr als 90%, wobei sich das Polybutadien vorzugsweise in einer Mischung mit höchstens 50 phe-Anteilen des Naturkautschuks oder eines synthetischen Polyisoprens befindet.

5. Kautschukmischung gemäß einem der Ansprüche 1 bis 4, **dadurch gekennzeichnet, dass** der verstärkende Füllstoff aus einem anorganischen Füllstoff, Ruß oder einer Mischung aus anorganischem Füllstoff und Ruß besteht.

6. Kautschukmischung gemäß einem der Ansprüche 1 bis 5, **dadurch gekennzeichnet, dass** das heterocycloaliphatische saure Ammoniumsalz mindestens aus zwei Stickstoffatomen und mindestens zwei Kohlenstoffatomen besteht, wobei das heterocycloaliphatische saure Ammoniumsalz mindestens aus einem heterocycloaliphatischen Ring mit den Kohlenstoff- und den Stickstoffatomen besteht.

7. Kautschukmischung gemäß Anspruch 6, **dadurch gekennzeichnet, dass** das heterocycloaliphatische saure Ammoniumsalz mindestens aus einem heterocycloaliphatischen Amin mit dem/den hetero-cycloaliphatischen Ring(en) besteht.

8. Kautschukmischung gemäß Anspruch 7, **dadurch gekennzeichnet, dass** das Verhältnis der Anzahl der Kohlenstoffatome zu der Anzahl der Stickstoffatome im heterocycloaliphatischen Amin mindestens 4.0 beträgt.

9. Kautschukmischung gemäß Anspruch 7 oder 8, **dadurch gekennzeichnet, dass** es sich bei dem heterocycloaliphatischen Amin um ein hetero-cycloaliphatisches tertiäres Amin handelt.

10. Kautschukmischung gemäß Anspruch 9, **dadurch gekennzeichnet, dass** es sich bei dem heterocycloaliphatischen tertiären Amin um ein hetero-cycloaliphatisches gebrücktes tertiäres Amin handelt.

11. Kautschukmischung gemäß Anspruch 10, **dadurch gekennzeichnet, dass** das heterocycloaliphatische tertiäre gebrückte Amin aus der Gruppe Hexamethylenetetramin, 1,4-Diazabicyclo[2.2.2]Octan und aus Mischungen derselben gewählt wird.

12. Kautschukmischung gemäß Anspruch 11, **dadurch gekennzeichnet, dass** es sich bei dem heterocycloaliphatischen tertiären gebrückten Amin um das Hexamethylenetetramin handelt.

13. Kautschukmischung gemäß einem der Ansprüche 1 bis 12, **dadurch gekennzeichnet, dass** die Kautschukmischung darüber hinaus aus einem Vulkanisationsverzögerer besteht.

14. Ein Reifen im unvulkanisierten Zustand, bestehend aus einer wärmeexpandierenden Kautschukmischung nach einem der Ansprüche 1 bis 13.

15. Ein Reifen im unvulkanisierten Zustand, bestehend aus einem Reifenprofil, das aus einer wärmeexpandierenden Kautschukmischung nach einem der Ansprüche 1 bis 13 besteht.

## Revendications

1. Composition de caoutchouc thermo-expansible, comprenant au moins un élastomère diène, plus de 50 pce d'un agent de remplissage de renforcement, entre 3 et 30 pce d'un carbonate et/ou d'un carbonate d'hydrogène, dans laquelle le carbonate ou le carbonate d'hydrogène comprend du sodium ou du potassium, et entre 3 et 60 pce d'un sel d'ammonium d'acide hétéro-cycloaliphatique, dans lequel une teneur totale du carbonate ou du carbonate d'hydrogène et du sel d'ammonium d'acide hétéro-cycloaliphatique est supérieure à 10 pce.

2. Composition de caoutchouc selon la revendication 1, dans laquelle l'élastomère diène est sélectionné dans le groupe constitué de caoutchouc naturel, de polyisoprènes synthétiques, de polybutadiènes, de copolymères de butadiène, de copolymères d'isoprène et des mélanges de ces élastomères.

3. Composition de caoutchouc selon la revendication 2, dans laquelle ladite composition de caoutchouc comprend de 50 à 100 pce de caoutchouc naturel ou de polyisoprène synthétique, de préférence le caoutchouc naturel ou le polyisoprène synthétique étant dans un mélange avec au maximum 50 pce d'un polybutadiène ayant une teneur en liaisons cis-1,4 de plus de 90 %.

4. Composition de caoutchouc selon la revendication 2, dans laquelle ladite composition comprend de 50 à 100 pce d'un polybutadiène ayant une teneur en liaisons cis-1,4 de plus de 90 %, de préférence le polybutadiène étant dans un mélange avec au maximum 50 pce de caoutchouc naturel ou d'un polyisoprène synthétique.

5. Composition de caoutchouc selon l'une quelconque des revendications 1 à 4, dans laquelle l'agent de remplissage de renforcement comprend un agent de remplissage inorganique, du noir de carbone ou un mélange d'agent de remplissage inorganique et de noir de carbone.

6. Composition de caoutchouc selon l'une quelconque des revendications 1 à 5, dans laquelle le sel d'ammonium d'acide hétéro-cycloaliphatique comprend au moins deux atomes d'azote et au moins deux atomes de carbone, de préférence le sel d'ammonium d'acide hétéro-cycloaliphatique comprend au moins un cycle hétéro-cycloaliphatique comprenant les atomes de carbone et les atomes d'azote.

7. Composition de caoutchouc selon la revendication 6, dans laquelle le sel d'ammonium d'acide hétéro-cycloaliphatique comprend au moins une amine hétéro-cycloaliphatique comprenant le(s) cycle(s) hétéro-cycloaliphatique(s).

8. Composition de caoutchouc selon la revendication 7, dans laquelle un rapport du nombre des atomes de carbone sur le nombre des atomes d'azote dans l'amine hétéro-cycloaliphatique est au maximum de 4.0.

9. Composition de caoutchouc selon la revendication 7 ou la revendication 8, dans laquelle l'amine hétéro-cycloaliphatique est une amine tertiaire hétéro-cycloaliphatique.

10. Composition de caoutchouc selon la revendication 9, dans laquelle l'amine tertiaire hétéro-cycloaliphatique est une amine tertiaire à tête de pont hétéro-cycloaliphatique.

11. Composition de caoutchouc selon la revendication 10, dans laquelle l'amine tertiaire à tête de pont hétéro-cycloaliphatique est choisie dans le groupe constitué d'hexaméthylènetétramine, de 1,4-diazabicyclo[2.2.2]octane et de mélanges de ceux-ci.

12. Composition de caoutchouc selon la revendication 11, dans laquelle l'amine tertiaire à tête de pont hétéro-cycloaliphatique est l'hexaméthylènetétramine.

13. Composition de caoutchouc selon l'une quelconque des revendications 1 à 12, dans laquelle la composition de caoutchouc comprend en outre un retardateur de vulcanisation.

14. Pneumatique dans l'état non vulcanisé, comprenant une composition de caoutchouc thermo-expansible selon l'une quelconque des revendications 1 à 13.

15. Pneumatique dans l'état non vulcanisé, comprenant une bande de roulement comprenant une composition de caoutchouc thermo-expansible selon l'une quelconque des revendications 1 à 13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3878147 A
- JP 3159803 A
- JP 2002211203 A
- EP 940435 A
- WO 2008080750 A
- WO 2008080751 A
- WO 2009083125 A
- WO 2009112220 A
- JP 2003183434 A
- JP 2004091747 A
- JP 2006299031 A
- JP 2007039499 A
- JP 2007314683 A
- JP 2008001826 A
- JP 2008150413 A
- EP 826522 A
- US 5147477 A
- US 6336487 B
- US 6013718 A
- US 5977238 A
- US 6815473 B
- US 20060089445 A
- US 6503973 B
- WO 9736724 A
- WO 9916600 A
- WO 2006069792 A
- WO 2006069793 A
- WO 2008003434 A
- WO 2008003435 A
- WO 03002648 A
- US 2005016651 A
- WO 03002649 A
- US 2005016650 A
- WO 02083782 A
- US 7217751 B
- WO 0230939 A
- US 6774255 B
- WO 0231041 A
- US 2004051210 A
- WO 2007061550 A
- WO 2006125532 A
- WO 2006125533 A
- WO 2006125534 A
- US 6849754 B
- WO 9909036 A
- WO 2006023815 A
- WO 2007098080 A
- US 3936451 A
- WO 02088238 A
- WO 0210269 A
- US 7199175 B
- EP 1052270 A
- EP 1505112 A
- WO 2010009850 A